# EUROPEAN PATENT APPLICATION

(11) **EP 2 323 000 A1**
(43) Date of publication of application: **18.05.2011**
(21) Application number: 10191567.6
(22) Date of filing: 17.11.2010
(51) Int. Cl.: G04F 5/00, H01S 3/11

(54) **Optical frequency source**

(30) Priority: 17.11.2009 GB 0920081
(71) Applicant: Rad Data Communications, 69719 Tel Aviv (IL)
(72) Inventor: Stein, Yaakov, 93715, Jerusalem (IL); Geva, Alon, 45295, Hod Ha´sharon (IL); Sorani, Yzhak, 52561, Ramat Gan (IL)
(74) Representative: Prüfer & Partner GbR European Patent Attorneys

(57) **Abstract**

A frequency reference, comprising: an optical waveguide closed on itself so that a light pulse inserted into the waveguide circulates therein; a light source coupled to the waveguide and controllable to generate a light pulse that circulates in the waveguide; and a detector coupled to a region of the waveguide that generates an output pulse each time the circulating light pulse passes the region.

## Description

### FIELD

The invention relates to frequency references used, by way of example, for synchronizing electronic and telecommunications systems, and/or maintaining accurate time of day.

### BACKGROUND

Highly stable and accurate frequency sources, hereinafter "frequency references", that provide reference frequencies, are required for the proper operation of many electronic and telecommunication systems, such as the Public Switched Telephone Network, cellular telephony systems, the Global Positioning System (GPS), instrumentation and measurement systems, and time synchronization of industrial equipment. The highly accurate reference frequency needed by such a system is usually derived from a Primary Reference Clock (PRC), typically comprising a Cesium or Rubidium atomic clock. The PRC outputs a continuous isochronous train of pulses characterized by highly accurate and stable pulse repetition frequency, conventionally referred to as a primary reference frequency, measured in pulses per second (pps). The PRC's frequency is distributed to locations and equipment of the systems that require it, where it may be used to calibrate local oscillators, typically based on piezoelectric crystals, having well defined resonant mechanical vibration frequencies. The output of the local oscillator is an isochronous train of pulses having a repetition frequency that is locked to that of the PRC.

While PRCs comprising an atomic clock provide reference frequencies that are highly stable and accurate, they are also expensive and cumbersome to deploy. On the other hand, piezoelectric crystal oscillators, which are relatively inexpensive and easy to deploy, are not, on their own, generally sufficiently stable or accurate for use without a PRC. This is due to the crystal's frequency differing from a required frequency as a result of variations in the manufacturing process, slow changes of the crystal oscillator's frequency over time due to aging, frequency variation due to changes in the ambient temperature, and rapid phase changes due to the physics of the piezoelectric process.

Various methods are known in the art to compensate for variation over time of the resonant frequency of a piezoelectric crystal oscillator. For example, a Temperature Controlled Crystal Oscillator (TCXO) partially compensates for frequency variation due to temperature changes by measuring the temperature of the operating environment of the oscillator and employing circuitry that counteracts predicted frequency variations due to the observed temperature changes. TCXOs may have frequency variations of 300 parts per billion (ppb) over a temperature range of 0 to 70 degrees Celsius. Better stability is attained using Oven Controlled Crystal Oscillators (OCXOs) that house the piezoelectric crystal in a temperature controlled oven or even multiple ovens. OCXOs may have a frequency variation with temperature of only 16 ppb over the temperature range of 0 to 70 degrees Celsius. However, the oven and associated control circuitry tend to make crystal oscillator frequency references relatively large, and increase their power consumption.

Crystal aging is due to the crystal's mechanical vibration. As with all mechanical devices, the crystal's physical characteristics vary slightly over time, causing its frequency to slowly drift away from the value it had when originally manufactured. TCXOs may have 2 to 3 parts per million (ppm) frequency variation per year due to aging, while OCXOs may have 400 ppb aging per year. Such aging can be significant, and generally cannot be compensated without expensive and logistically difficult recalibration. In telecommunications networks, the frequency of crystal oscillators is continuously corrected by comparison to the primary reference frequency as distributed over a suitable distribution network.

### SUMMARY

An aspect of an embodiment of the invention relates to providing a relatively inexpensive frequency reference that provides a relatively highly stable and accurate, frequency reference.

An aspect of an embodiment of the invention relates to providing a frequency source characterized by relatively small aging effects.

An aspect of an embodiment of the invention relates to providing a frequency reference that has significantly lower power consumption than an OCXO.

According to an aspect of some embodiments of the invention, the frequency generated by the frequency reference changes relatively moderately in response to changes in the ambient environment.

According to an aspect of an embodiment of the invention, the frequency reference generates a train of pulses having a relatively accurate repetition rate derived from the transit time of a pulse of light in a closed optical waveguide, also referred to as an "optical oscillator". Optionally, the waveguide comprises an optical fiber.

According to an aspect of an embodiment of the invention, the optical oscillator generates a series of finite-duration pulse trains, each train having a relatively accurate repetition rate derived from the transit time of a pulse of light in the closed optical waveguide.

An aspect of some embodiments of the invention, relates to providing a frequency reference to be used in place of an atomic clock, the frequency of the frequency reference being derived from the repetition rate of the optical oscillator.

An optical frequency reference, hereinafter referred to as a "fiber ring oscillator", in accordance with an embodiment of the invention, comprises an optical fiber, hereinafter also referred to as a "fiber ring", closed on itself so that a pulse of light introduced into the fiber repeatedly circulates in the fiber. A light source, such as a laser or Light Emitting Diode (LED), coupled to the fiber is operable to introduce a light pulse into the fiber, and a light detector, such as a photodiode, coupled to the fiber provides an output pulse for each round trip of the pulse in the fiber. The detector thereby provides a train of pulses having a repetition interval equal to the round trip transit time of the light pulse in the fiber. As the pulse propagates in the fiber ring, it is attenuated by losses in the fiber and by energy that is removed from the pulse and detected by the light detector each time the pulse circulates around the fiber ring. When the pulse has attenuated to such a degree that it is no longer satisfactorily detected by the detector, a new pulse is introduced to the fiber ring. In some embodiments of the invention, the amplitude of the detected output pulses is used to decide when to input a new pulse. In some embodiments, the time between input pulses is preset based on the known rate of amplitude decay.

In accordance with an embodiment of the invention, an output frequency is derived from the interpulse period, *i.e.* the time between two pulses derived from a same input pulse arriving at the detector.

In an embodiment of the invention, the light source and the detector are coupled to the fiber using optical couplers, such as 2:1 beam splitters. An input pulse, having been introduced into the fiber ring by a 2:1 input splitter, arrives at a 2:1 output splitter where half of its energy exits the fiber ring and is detected as an output pulse by the detector, while the other half continues along the fiber ring. After traveling around the ring, the pulse is reintroduced to the ring via the other leg of the input splitter and arrives a second time at the output splitter. Once again, neglecting transit losses in the fiber, half of the energy reaching the output splitter, *i.e*. about one quarter of the energy in the original pulse, exits the ring and is detected by the detector, and about a quarter of the original energy continues around the ring again. For this embodiment, the detector provides a train of output pulses having geometrically decaying energies and a period equal to the time required for the light pulse to traverse the fiber ring, and. In an embodiment of the invention, when the energy of the circulating light pulse has been attenuated to a degree to which it is no longer satisfactorily detected, the light source introduces a new light pulse into the fiber.

In some embodiments of the invention, the detector is coupled to the optical fiber by a perturbation, such as a kink, scratch or groove, in the fiber, that enables a small amount of light to escape from the fiber. Each time a circulating light pulse passes the perturbation, a relatively small amount of energy in the circulating light pulse is shunted out of the fiber by the perturbation towards the detector.

In some embodiments of the invention, the couplers comprise an optical switch, such as a voltage controlled directional coupler controllable to couple a selectable amount of energy from a light pulse from the light source into the fiber or from a light pulse circulating in the fiber to the detector. Optionally, the coupler is controlled to insert a relatively large portion of a light pulse provided by the light source into a circulating light pulse in the fiber but to divert a relatively small portion of the energy in the circulating pulse to the detector each time the circulating pulse makes a round trip in the fiber and enters the coupler.

Whereas a fiber ring oscillator, in accordance with an embodiment of the invention should not suffer from aging, since it does not mechanically vibrate as does, for example, a quartz crystal, it is still subject to frequency variation due to temperature changes. Generally, as the temperature rises, the optical fiber expands, increasing the interval between successive detected pulses. In some embodiments, this is at least partially compensated by temperature sensors or temperature control, as is done in TCXOs and/or OCXOs. In some embodiments, a temperature compensated optical fiber is utilized, wherein the optical characteristics of the fiber are chosen to mitigate effects of changes in an ambient temperature.

In some embodiments of the invention, the output pulse train of a fiber ring oscillator is processed to provide a reference frequency, optionally different from a frequency, hereinafter referred to as a "fundamental frequency", naturally provided by the round trip time of a light pulse in the fiber ring oscillator.

The precise value of the interpulse period for a given fiber ring cannot be readily controlled during manufacture. Thus, in an embodiment of the invention the interpulse period of a fiber ring oscillator is measured after its manufacture, and appropriate circuitry is utilized to adjust the oscillator output to provide the desired frequency. In some embodiments, the circuitry comprises a digital synthesizer that receives a sequence of interpulse delays generated by the fiber ring oscillator and outputs a stable isochronous series of pulses having the desired frequency.

### (CLAIM SUMMARY)

### BRIEF DESCRIPTION OF FIGURES

Non-limiting examples of embodiments of the invention are described below with reference to figures attached hereto that are listed below. Identical structures, elements or parts that appear in more than one figure are generally labeled with a same numeral in all the figures in which they appear. Dimensions of components and features shown in the figures are chosen for convenience and clarity of presentation and are not necessarily shown to scale.
Fig. 1 schematically shows a fiber ring oscillator in accordance with an embodiment of the invention wherein two 2:1 couplers are used; and
Fig. 2 schematically shows another fiber ring oscillator, in accordance with an embodiment of the invention wherein light is introduced via a 2:1 coupler, but exits the rings via a kink.
Figure 3 schematically shows a frequency reference comprising a fiber ring oscillator, in accordance with an embodiment of the invention.

### DETAILED DESCRIPTION

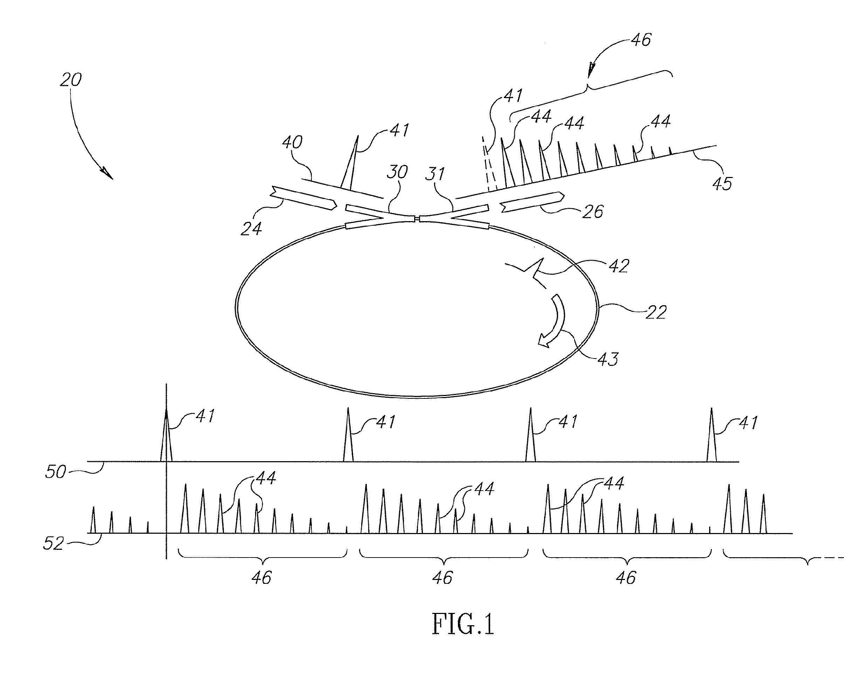

Fig. 1 schematically shows a fiber ring oscillator 20, in accordance with an embodiment of the invention, comprising an optical fiber ring 22 closed on itself, and shown as elliptical for convenience of presentation. A light source 24, optionally a solid state laser or LED, controllable to generate light pulses, hereinafter referred to as "insertion light pulses", is coupled to fiber 22 optionally by a 2:1 splitter 30, hereinafter referred to as an "insertion splitter 30" so that light from a light pulse generated by the laser is coupled into fiber 22. A light detector 26 is coupled to fiber 22 so that light from a light pulse propagating in fiber 22 that enters coupler 30 is shunted to the detector. Optionally, as shown in Fig. 1, light detector 26 is coupled to the fiber by a 2:1 splitter 31, hereinafter an "output splitter 31".

An insertion light pulse generated by laser 24 is schematically indicated along a time line 40 by a triangular pulse 41. Whereas only one insertion light pulse 41 is shown along time line 40, as discussed below and shown along a time line 50, laser 24 is in general controlled to generate new insertion light pulses 41 from time to time.

Light from insertion light pulse 41 enters insertion splitter 30 and propagates to output splitter 31, which shunts about one half of the energy in the insertion pulse to detector 26. About half of the remaining energy in insertion pulse 41 is directed by the output splitter to enter fiber ring 22 as a light pulse, hereinafter a "circulating light pulse", schematically indicated by a triangular pulse 42, which repeatedly circulates around the fiber, optionally in a clockwise direction indicated by a block arrow 43. Each time circulating light pulse 42 reaches insertion splitter 30, the insertion splitter directs the circulating light pulse to output splitter 31, which shunts about half of the energy in the circulating pulse as a "shunted light pulse" to detector 26 and about the other half to circulate once again around fiber ring 22. Light pulses shunted by output splitter 31 to detector 26 are schematically represented in Fig. 1 by triangular pulses 44 along a time line 45, and form a train 46 of light pulses incident on detector 26.

Since energy is removed from circulating light pulse 42 every time it passes through splitters 30 and 31, the circulating light pulse attenuates every round trip through fiber ring 22 and each subsequent shunted light pulse 44 in light pulse train 46 reaching detector 26 contains a fraction of the energy of the immediately preceding light pulse 44 in the train. Decrease in height of shunted light pulses 44 in train 46 schematically represents the attenuation of light pulses reaching detector 26 from circulating light pulse 42. Whereas typically the rate of attenuation of energy in the light pulses is substantially geometric, the scale of shunted light pulses 44 and their rate of decease in amplitude in Fig. 1 and figures that follow, is shown substantially as linear for convenience of presentation.

It is noted that whereas detector 26 is coupled to fiber ring 22 by a 2:1 output splitter, practice of the invention is of course not limited to output splitters having a 2:1 splitting ratio and the output splitter may have any advantageous splitting ratio. For example, an output splitter coupling detector 26 to fiber ring 22 may have a coupling ratio of 8:1

Let a round trip transit time of circulating light pulse 43 be represented by τₒ. Then shunted light pulses 44 are incident on detector 26, and the detector generates a train of output pulses (not shown) responsive to the shunted light pulses, at a pulse repetition frequency fₒ = 1/τₒ. In accordance with an embodiment of the invention, the output pulses provided by detector 26 are used to lock a frequency reference signal.

When circulating pulse 42 is attenuated to such an extent that detection of shunted light pulses 46 directed by coupler 30 from the circulating pulse is no longer satisfactory, light source 24 is controlled to generate another insertion light pulse 41 for insertion of a new circulating light pulse 42 into fiber 22 and generation of a new, corresponding train 46 of shunted light pulses 44. Time line 50 schematically shows a plurality of insertion light pulses 41 generated by laser 24 and a time line 52 schematically shows light pulse trains 46 corresponding to the insertion light pulses.

By way of a numerical example, fiber 22 is assumed to have an index of refraction equal to 1.5, and a length equal to 20 cm so that, τₒ = 10⁻⁹ = 1 nsec, and fₒ = 10⁹ cps = 1 GHz. To provide appropriate temporal separation of shunted light pulses 44, laser 24 generates insertion light pulses 41 having a pulse width advantageously equal to or less than less than about 10⁻¹⁰ s.

The frequency fₒ of a fiber ring oscillator will, in general, deviate from the expected desired fiber frequency "f_{FD}" due to irreproducibility of the manufacturing process used to produce the fiber ring oscillator. In some embodiments of the invention, the frequency of the fiber ring oscillator is measured after manufacture and a frequency deviation Δf = f_{FD} - fₒ is determined. Methods well known in the art are used to generate the desired fiber frequency f_{FD} responsive to the frequency deviation Δf.

To aid in maintaining stability of the fundamental frequency of fiber ring oscillator 20 and moderate change in the fundamental frequency due to change in temperature of an ambient operating environment of the fiber ring oscillator, optionally, fiber 22 may be selected so that its index of refraction, n, decreases with increase in temperature. The rate of decrease of n with temperature increase is advantageously determined so that resultant increase in speed of light in the fiber with temperature increase produces a decrease in transit time τₒ that substantially offsets increase in the transit time due to increase in length of the fiber with temperature increase.

In some embodiments of the invention, temperature of an ambient operating environment of fiber ring oscillator 20 is monitored and expected changes due to thermal expansion or contraction are compensated. For example, the output pulses may be input to a digital synthesizer that generates isochronous pulse trains having a desired frequency responsive to the input pulses and the measured ambient temperature. In some embodiments of the invention, a fiber ring oscillator, such as fiber ring oscillator 20, is housed in a suitable oven to maintain the oscillator at a constant desired temperature in a temperature stable operating environment.

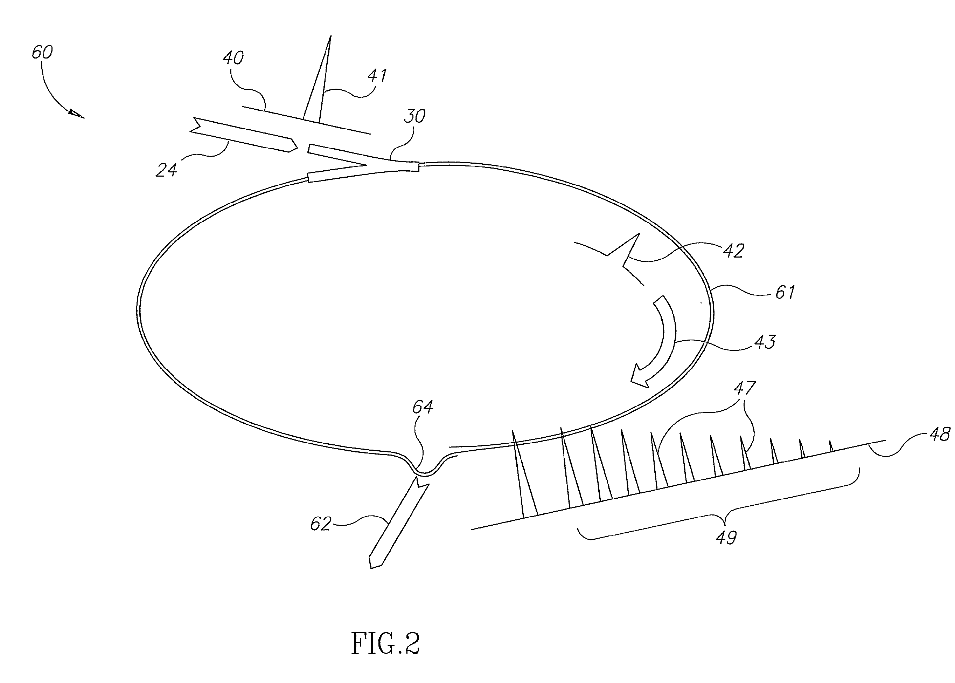

Fig. 2 schematically shows another fiber ring oscillator 60, comprising a laser 24 coupled to a fiber ring 61 by an insertion splitter 30 and a detector 62 coupled to the fiber ring by a perturbation formed in the fiber, in accordance with an embodiment of the invention. Optionally, the perturbation, as shown in the figure, comprises a kink 64 in the fiber which causes a relatively small amount of circulating light pulse 42 in the fiber to be shunted out of the fiber to detector 62 every time the circulating light pulse passes through the bend. Bend 64 may be located at almost any location along fiber ring 22 and is shown for convenience of presentation at a region displaced along the fiber by half the length of the fiber from a region at which laser 24 is coupled to the fiber by splitter 31. Detector 62 is exposed to a train 49 of shunted light pulses 47 schematically shown along a time line 48 having a fundamental repetition frequency fₒ equal to a round trip time τₒ of circulating light pulse 42 in fiber ring 61.

Whereas in the embodiments of an optical frequency reference described above, a detector is coupled to a fiber ring by a coupler, e.g. splitter 31, bend 64, having a constant splitting ratio, a detector in a fiber ring oscillator in accordance with an embodiment of the invention is optionally coupled to a fiber ring using a coupler having a controllable splitting ratio. For example, the coupler may comprise two closely adjacent waveguides for which optical energy introduced into one of the waveguides is transferred to the other responsive to an electric field applied to the waveguide. The electric field controls the fraction of energy that is transferred and thereby the splitting ratio of the switch. Optionally, the splitting ratio is controlled to increase as energy in a circulating light pulse in the fiber ring decreases in order to provide output light pulses to a detector having substantially the same amount of energy. Optionally, the splitting ratio is controlled to moderate amounts of energy shunted from a circulating light pulse and increase the number of round trips the pulse makes in the fiber ring before a new insertion light pulse is required.

It is also noted that whereas embodiments of optical frequency references described above comprise an optic fiber in which a circulating light pulse propagates, practice of the invention is not limited to optic fibers, and any suitable optical waveguide closed on itself may be used to confine a circulating light pulse in a frequency reference in accordance with an embodiment of the invention. For example, a waveguide formed in a suitable substrate, such as a glass, by an ion exchange process known in the art may be used to confine a circulating light pulse in a frequency reference in accordance with an embodiment of the invention. In some embodiments of the invention the wave guide is a solid state waveguide formed in a lithographic process.

The inventors believe that that stability, accuracy, and relative resistance to effects of aging of the pulse repetition rate of a fiber ring oscillator in accordance with an embodiment of the invention make the fiber ring oscillator suitable as a relatively inexpensive frequency reference for use in electronic and telecommunication systems.

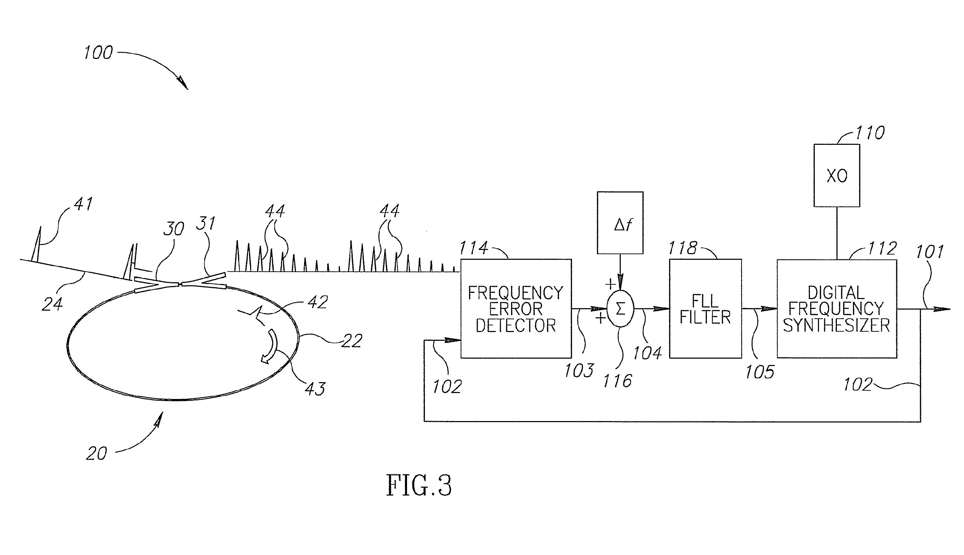

Fig. 3 schematically shows a frequency reference 100 comprising fiber ring oscillator 20, in accordance with an embodiment of the invention. Frequency reference 100 is intended to generate an output signal 101 at reference frequency f_{R}. The fiber ring oscillator is intended to generate a sequence of pulse trains with desired frequency f_{D}, but due to manufacturing tolerances in fact is measured to have frequency fₒ = f_{D} - Δf, optionally by comparison with a PRC.

Were the output of the fiber ring oscillator 20 to be a single continuous pulse train of natural frequency "f_{N}" it would be possible to convert frequency f_{N} into frequency f_{R} by frequency multiplication and division. This is conventionally done in a Digital Frequency Synthesizer (DFS), which outputs "R" output pulses for every "N" input pulses. However, since the fiber ring oscillator outputs a sequence of pulse trains without phase coherence between the successive pulse trains, a quartz oscillator 110 of frequency f_{X} is employed.

Quartz oscillator 110 drives a DFS 112 to produce a continuous output signal 101. The multiplication and division parameters of the DFS are set by comparing the frequency of DFS output signal 101 to the fiber ring frequency fₒ by inputting a tap 102 of the output signal to a frequency error detector 114. Error detector 114 generates a continuous output signal 103 equal to a difference between frequency fₒ provided by fiber ring oscillator 20 and the frequency of tap 102. This frequency difference is further compensated for the manufacturing inaccuracy Δf by adding Δf to the error signal in adder 116. The output of this adder is a noisy error signal 104, which after filtering in FLL filter 118 is input 105 to DFS 112 in order to correct its parameters to ensure that output signal 101 is indeed a pulse train of frequency f_{R}, said frequency locked to the PRC.

In the description and claims of the present application, each of the verbs, "comprise" "include" and "have", and conjugates thereof, are used to indicate that the object or objects of the verb are not necessarily an exhaustive listing of members, components, elements or parts of the subject or subjects of the verb.

The invention has been described with reference to embodiments thereof that are provided by way of example and are not intended to limit the scope of the invention. The described embodiments comprise different features, not all of which are required in all embodiments of the invention. Some embodiments of the invention utilize only some of the features or possible combinations of the features. Variations of embodiments of the described invention and embodiments of the invention comprising different combinations of features than those noted in the described embodiments will occur to persons of the art. The scope of the invention is limited only by the following claims.

## Claims

1. A frequency reference, comprising:
an optical waveguide closed on itself so that a light pulse inserted into the waveguide circulates therein;
a light source coupled to the waveguide and controllable to generate a light pulse that circulates in the waveguide; and
a detector coupled to a region of the waveguide that generates an output pulse each time the circulating light pulse passes the region.

2. A frequency reference according to claim 1 wherein the waveguide comprises an optical fiber.

3. A frequency reference according to claim 1 or claim 2 and comprising a splitter that couples the light source to the waveguide.

4. A frequency reference according to any of the preceding claims and comprising a splitter that couples the light detector to the waveguide.

5. A frequency reference according to claim 3 or claim 4 wherein the splitter has a fixed splitting ratio.

6. A frequency reference according to any of the preceding claims and comprising a perturbation in the waveguide that couples the light detector to the waveguide.

7. A frequency reference according to any of the preceding claims and comprising a perturbation in the waveguide that couples the light detector to the waveguide.

8. A frequency reference according to any of the preceding claims and comprising a temperature controlled oven that houses the optical waveguide.

9. A frequency reference according to any of the preceding claims and comprising circuitry that monitors operating temperature of the waveguide and compensates for expected changes resulting from thermal expansion or contraction.

10. A frequency reference according to any of the preceding claims and comprising circuitry that receives the output pulses and generates a pulse train responsive to the received pulses and the operating temperature.

11. A frequency reference in accordance with any of the preceding claims and comprising circuitry for adjusting a repetition frequency of the output pulses responsive to a PRC.

12. A telecommunication system comprising a frequency reference in accordance with claim 11.

13. An electronic system comprising a frequency reference in accordance with claim 11.

14. A method of producing a reference frequency, the method comprising:
producing a first pulse train having a first repetition frequency by circulating a pulse of light around a fixed path and shunting a portion of the pulse of light out of the fixed path at a fixed point thereof each time the pulse traverses the path;
exciting a frequency synthesizer to generate a second pulse train having a second repetition frequency; and
adjusting the second repetition frequency responsive to the first repetition frequency to provide the reference frequency.

15. A method according to claim 14 and correcting the reference frequency responsive to a PRC.
